# EUROPEAN PATENT SPECIFICATION

(11) **EP 2 808 108 B1**
(45) Date of publication and mention of the grant of the patent: **13.03.2019**
(21) Application number: 13741096.5
(22) Date of filing: 16.01.2013
(51) Int. Cl.: B23B 19/00, B23B 19/02

(54) **COMPLEX MACHINING TURNING CENTER**
DREHZENTRUM FÜR KOMPLEXE BEARBEITUNG
TOUR D'USINAGE COMPLEXE

(30) Priority: 26.01.2012 KR 20120007497
(43) Date of publication of application: 03.12.2014
(73) Proprietor: Doosan Machine Tools Co., Ltd., Chang-won-si, Gyeongsangnam-do 51537 (KR)
(72) Inventor: SHIN, Young Dong, Gimhae-si Gyeongsangnam-do 621-782 (KR)
(74) Representative: Isarpatent
(86) International application number: PCT/KR2013/000320
(87) International publication number: WO 2013/111956

(56) References cited:
- EP-A1- 0 259 637
- EP-A1- 0 538 515
- EP-A1- 1 122 008
- DE-A1- 3 824 602
- JP-A- H0 531 601
- JP-A- 2002 059 301
- JP-B2- H07 102 481
- KR-B1- 100 652 258
- US-A- 4 612 832
- US-A- 4 840 095

## Description

The present invention relates to a complex machining turning center.

DE 3824602 A1 discloses a complex machining turning center according to the preamble of claim 1 in which a dual post is arranged to be moved on a bed along an X-axis by a slide rest, a tail stock is arranged to be moved along a Z-axis direction and a headstock is arranged to be moved in a C-axis direction, the complex machining turning center comprising B-axis swing movement unit which allows a headstock to swing along a B-axis on a plane coordinate formed by the X-axis and the Z-axis. The tool post is moveable along an Y-axis upward and downward.

### [Background Art]

As representative machine tools, there are a lathe, a milling machine, a machining center, and the like. Among the machine tools, the lathe is called a turning center, and serves to rapidly rotate a workpiece to be machined, bring a tool into contact with the workpiece, and machine the workpiece.

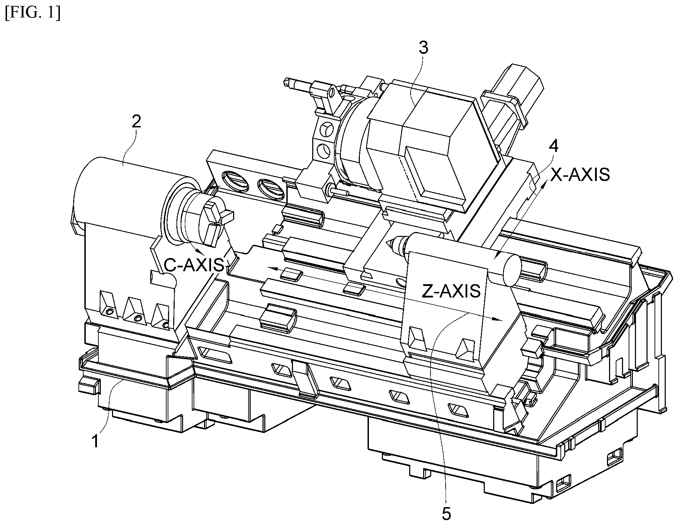

FIG. 1 is an image of a turning center according to the prior art.

Referring to FIG. 1, the turning center in the prior art has a 3-axis movement structure in which a tool post 3 on a bed 1 is moved along an X-axis by a slide rest 4, a tailstock 5 is moved in a Z-axis direction, and a headstock 2 is moved in a C-axis direction, and the workpiece is machined by the movement, conveyance or rotation in the X-axis, Z-axis and C-axis directions.

However, in a case in which the turning center has the structure illustrated in FIG. 1, simple machining of the workpiece can be performed, but complex machining of the workpiece is actually difficult to be performed.

It is possible to make a total of 5-axis movement (conveyance) structure in addition to the existing 3-axis conveyance structure where it is possible to perform a Y-axis up/down movement in which the headstock 2 is moved upward and downward along a Y-axis that crosses an X-axis and a Z-axis of FIG. 1, and it is possible to perform a B-axis swing movement in which the headstock 2 swings on a plane coordinate formed by the X-axis and the Z-axis, and as a result, it is expected that complex machining of the workpiece will become easy, such that researches and developments thereof are required.

### [Disclosure]

### [Technical Problem]

Accordingly, the present disclosure has been made to solve the aforementioned problems, and an object of the present disclosure is to provide a complex machining turning center which is improved to be capable of easily performing complex machining by making it possible for a headstock to perform a Y-axis up/down movement and a B-axis swing movement in addition to an existing 3-axis movement structure.

### [Technical Solution]

In order to achieve the aforementioned object, the present disclosure provides a complex machining turning center as defined in claim 1.

In addition, the present disclosure further provides the following exemplary embodiments regarding to the exemplary embodiment of the present disclosure.

According to the exemplary embodiment of the present disclosure, the B-axis swing movement unit may include a B-axis coupling which connects the B-axis swing power generating unit to the swing power transmission unit.

According to the exemplary embodiment of the present disclosure, the swing unit may be a roller gear cam, and the swing power transmission unit may be a worm shaft that engages with the roller gear cam.

According to the exemplary embodiment of the present disclosure, both end portions of the worm shaft may be supported by bearings.

According to the exemplary embodiment of the present disclosure, the Y-axis up/down movement unit may include a Y-axis coupling which connects the power transmission unit to the Y-axis power generating unit; and a feed box which supports the power transmission unit and the Y-axis power generating unit, and has a bearing disposed therein.

According to the exemplary embodiment of the present disclosure, the power transmission unit may be a ball screw.

According to the exemplary embodiment of the present disclosure, the B-axis swing power generating unit and the Y-axis power generating unit may be servomotors.

### [Advantageous Effects]

According to the present disclosure, complex machining may be easily performed by improving the turning center by making it possible for the headstock to perform the Y-axis up/down movement and the B-axis swing movement in addition to the existing 3-axis movement structure.

### [Description of Drawings]

FIG. 1 is an image of a turning center according to the prior art.
FIG. 2 is an image of a complex machining turning center according to an exemplary embodiment of the present disclosure.
FIG. 3 is a perspective view that corresponds to FIG. 2.
FIG. 4 is an enlarged view of main parts of FIG. 3, which is a view illustrating a Y-axis up/down movement of a headstock.
FIG. 5 is an enlarged view of main parts of FIG. 3, which is a view illustrating a B-axis swing movement of a headstock.
FIGS. 6 and 7 are cut-away perspective views of main parts of FIG. 3 for explaining the Y-axis up/down movement unit and the B-axis swing movement unit, respectively.
FIGS. 8 and 9 are cross-sectional views of main parts of FIG. 3 for explaining the Y-axis up/down movement unit and the B-axis swing movement unit, respectively.

### [Description of Main Reference Numerals of Drawings]

101: Bed
102: Headstock
103: Tool post
104: Slide rest
105: Tailstock
110: B-axis swing movement unit
111: B-axis body
112: B-axis servomotor
113: Roller gear cam
114: Worm shaft
115: B-axis coupling
116: Bearing
120: Y-axis up/down movement unit
121: Y-axis servomotor
122: Ball screw
123: Y-axis guide
124: Feed box
125: Y-axis coupling
126: Bearing

### [Best Mode]

Hereinafter, the present disclosure will be described with reference to the accompanying drawings.

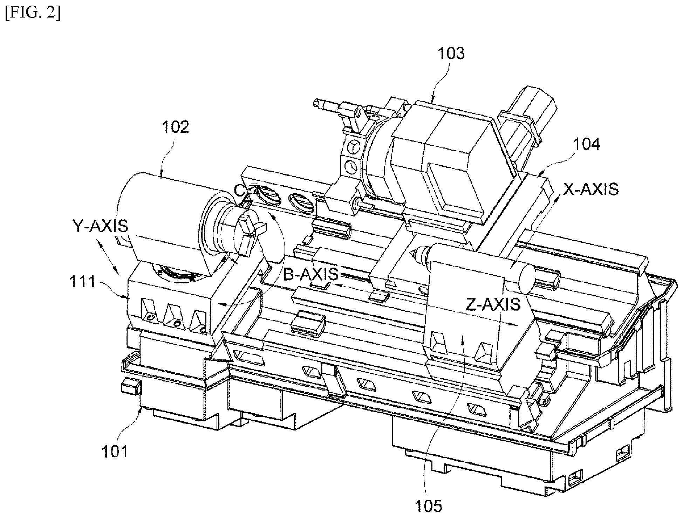

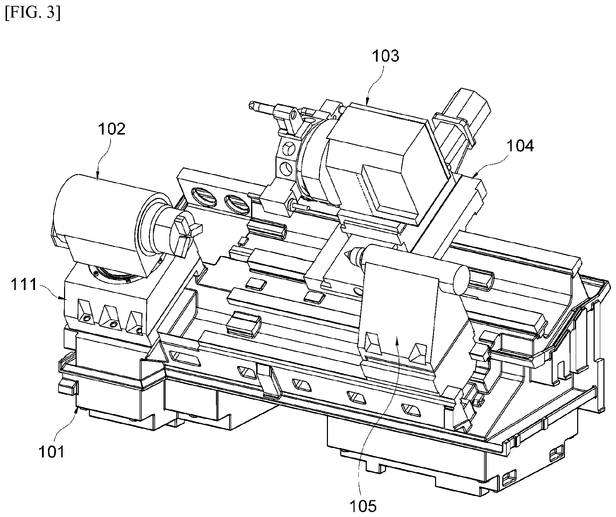

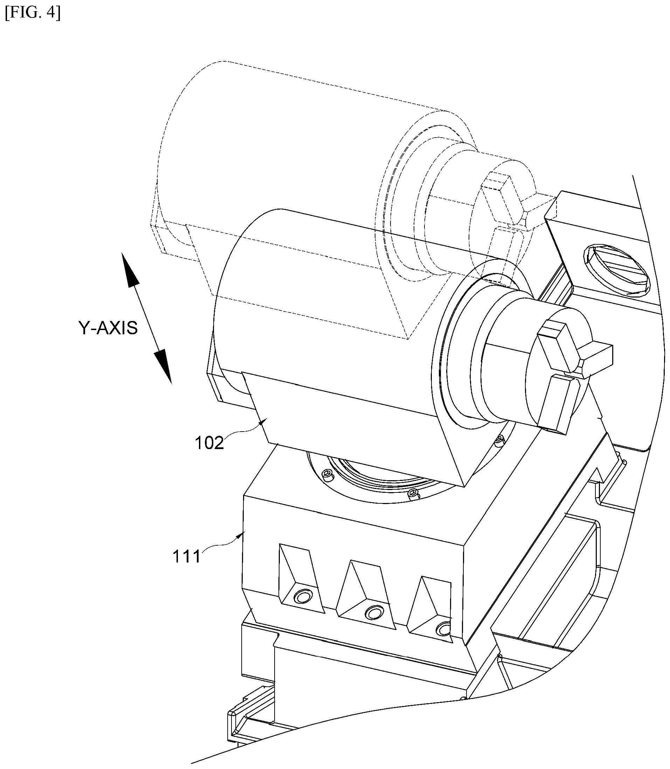

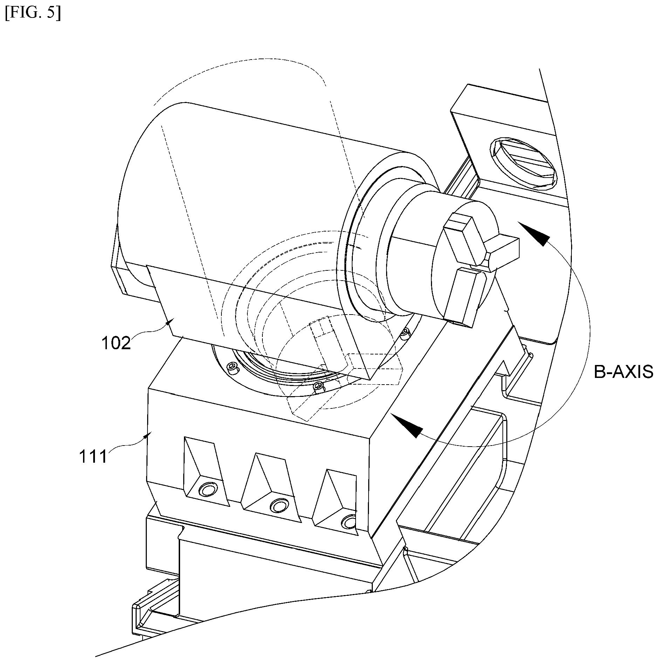

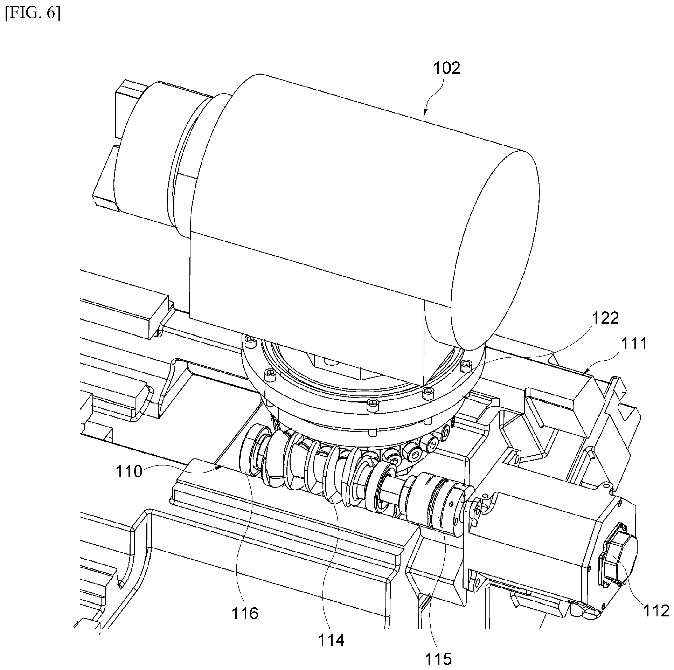

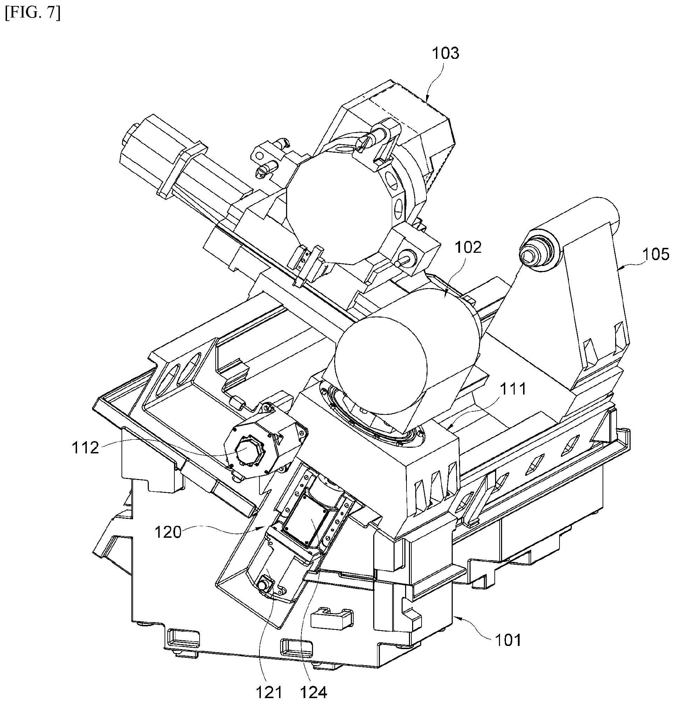

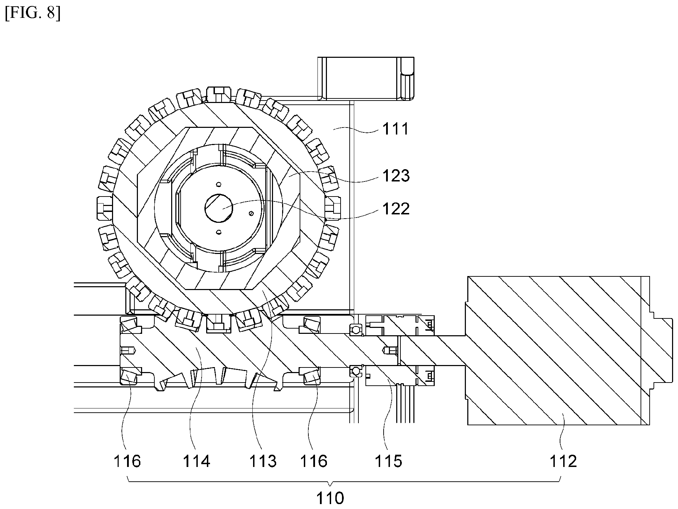

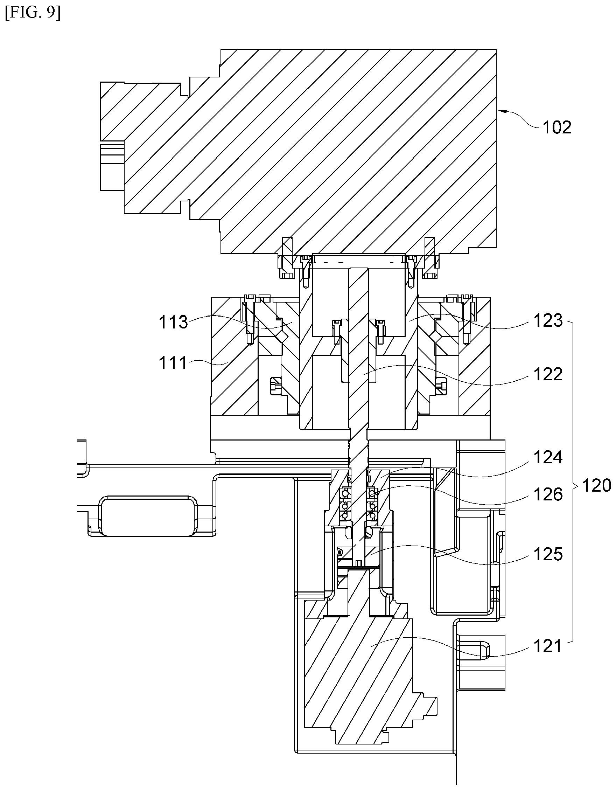

FIG. 2 is an image of a complex machining turning center according to an exemplary embodiment of the present disclosure, FIG. 3 is a perspective view that corresponds to FIG. 2, FIG. 4 is an enlarged view of main parts of FIG. 3, which is a view illustrating a Y-axis up/down movement of a headstock, FIG. 5 is an enlarged view of main parts of FIG. 3, which is a view illustrating a B-axis swing movement of a headstock, FIGS. 6 and 7 are cut-away perspective views of main parts of FIG. 3 for explaining the Y-axis up/down movement unit and the B-axis swing movement unit, respectively, and FIGS. 8 and 9 are cross-sectional views of main parts of FIG. 3 for explaining the Y-axis up/down movement unit and the B-axis swing movement unit, respectively.

Referring to FIGS. 2 to 5 first among the accompanying drawings, a complex machining turning center according to an exemplary embodiment of the present disclosure includes a 3-axis movement structure in which a tool post 103 is moved on a bed 101 along an X-axis by a slide rest 104, a tailstock 105 is moved along a Z-axis direction, and a headstock 102 is moved in a C-axis direction.

The 3-axis movement structure is identically applied to the general turning center that has been described with reference to FIG. 1.

However, in addition to the aforementioned 3-axis movement structure, the complex machining turning center according to the exemplary embodiment of the present disclosure further includes a Y-axis up/down movement structure in which the headstock 102 is moved upward and downward along a Y-axis that crosses the X-axis and a Z-axis of FIG. 2, and a B-axis swing movement structure in which the headstock 102 swings on a plane coordinate formed by the X-axis and the Z-axis of FIG. 2, and as a result of, it is possible to make a total of 5-axis movement (conveyance) structure.

Therefore, unlike the prior art, it is possible to perform various machining work from simple machining of a workpiece to complex machining of the workpiece.

In the complex machining turning center according to the present disclosure, the tool post 103 is moved on the bed 101 along the X-axis by the slide rest 104, the tailstock 105 is moved in the Z-axis direction, and the headstock 102 is moved in the C-axis direction, and the complex machining turning center includes a B-axis swing movement unit 110 which allows the headstock 102 to swing along the B-axis on the plane coordinate formed by the X-axis and the Z-axis, and a Y-axis up/down movement unit 120 which allows the headstock 102 to be moved upward and downward along the Y-axis that crosses the X-axis and the Z-axis.

First, the B-axis swing movement unit 110, which allows the headstock 102 to swing along the B-axis on the plane coordinate formed by the X-axis and the Z-axis of FIG. 2, will be described specifically.

As illustrated in FIGS. 6 and 8, in the exemplary embodiment of the present disclosure, the B-axis swing movement unit 110 includes a B-axis body 111, a swing unit, a swing power transmission unit, a B-axis swing power generating unit, and a B-axis coupling 115. The swing unit is disposed inside the B-axis body 111. The swing unit is connected with the headstock 102, and performs a swing movement along with the headstock 102. In another exemplary embodiment of the present disclosure, the swing unit may be formed as a roller gear cam 113. The swing power transmission unit engages with the swing unit, and transmits swing power. Preferably, the swing power transmission unit is formed as a worm shaft 114 that engages with the roller gear cam 113. The B-axis swing power generating unit is connected to the swing power transmission unit and generates rotational power. In another preferred exemplary embodiment of the present disclosure, the B-axis swing power generating unit may be formed as a servomotor 112. The swing power transmission unit swings by the rotational power generated by the B-axis swing power generating unit. The B-axis coupling 115 connects the B-axis swing power generating unit to the swing power transmission unit. In the preferred exemplary embodiment of the present disclosure, the B-axis swing movement unit 110 has a structure in which the roller gear cam 113 and the worm shaft 114 are disposed inside the B-axis body 111, and the B-axis servomotor 112 and the worm shaft 114 are directly coupled to each other by the B-axis coupling 115.

Preferably, both end portions of the worm shaft 114 are supported by bearings 116. Therefore, a smooth rotational operation of the worm shaft 114 may be assured.

By the aforementioned configuration, when rotational force in forward and reverse directions of the B-axis servomotor 112 is transmitted to the worm shaft 114 through the B-axis coupling 115, the worm shaft 114 rotates the roller gear cam 113 leftward and rightward in the B-axis direction, which a direction that crosses the work shaft 114, while being rotated in forward and reverse directions. Therefore, the headstock 102 may perform the B-axis swing movement.

Next, the Y-axis up/down movement unit 120, which allows the headstock 102 to be moved upward and downward along the Y-axis that crosses the X-axis and the Z-axis of FIG. 2, will be described specifically.

As illustrated in FIGS. 7 and 9, the Y-axis up/down movement unit 120 includes a Y-axis guide 123, a power transmission unit, a Y-axis power generating unit, a Y-axis coupling 125, and a feed box 124. The Y-axis guide 123 is formed inside the roller gear cam 113, has the same shape as the roller gear cam 113, and is operated along with the headstock 102. The power transmission unit is disposed to be elongated in the Y-axis direction, and connected with the Y-axis guide 123. Preferably, the power transmission unit is formed as a ball screw 122. The Y-axis power generating unit generates power for a Y-axis up/down movement. In another preferred exemplary embodiment of the present disclosure, the Y-axis power generating unit may be formed as a servomotor 121. The Y-axis coupling 125 connects the power transmission unit to the Y-axis power generating unit. The feed box 124 supports the power transmission unit and the Y-axis power generating unit. In addition, the feed box 124 has a bearing 126 disposed therein.

In order for the headstock 102 to be moved upward and downward along the Y-axis, rotational force of the Y-axis servomotor 121 is transmitted to the Y-axis guide 123 through the ball screw 122 when the Y-axis servomotor 121 is operated, and the Y-axis guide 123 is moved upward and downward along the Y-axis along with the headstock 102.

In this case, the roller gear cam 113, which is about to be rotated leftward and rightward by the rotation of the ball screw 122, may be controlled to be moved only downward or upward as the B-axis servomotor 112 maintains a stopped state, as described above. In addition, the Y-axis guide 123, which is formed inside the roller gear cam 113 and has the same shape as the roller gear cam 113, is also rotated leftward and rightward. When the headstock 102 is about to be moved downward and upward along a groove of the ball screw 122 connected with the Y-axis guide 123 when the Y-axis guide 123 is rotated leftward and rightward, the Y-axis servomotor 112 reversely controls the headstock 102 to maintain a current position, and as a result, the B-axis may be controlled only leftward and rightward.

As described above, according to the present disclosure, complex machining may be easily performed by improving the turning center by making it possible for the headstock 102 to perform the Y-axis up/down movement and the B-axis swing movement in addition to the existing 3-axis movement structure.

### [Industrial Applicability]

The present disclosure relates to a complex machining turning center, and more particularly, to a complex machining turning center which is improved to be capable of easily performing complex machining by making it possible for a headstock to perform a Y-axis up/down movement and a B-axis swing movement in addition to an existing 3-axis movement structure.

## Claims

1. A complex machining turning center in which a tool post (103) is arranged to be moved on a bed (101) along an X-axis by a slide rest (104), a tailstock (105) is arranged to be moved along a Z-axis direction, and a headstock (102) is arranged to be moved in a C-axis direction, the complex machining turning center comprising:
a B-axis swing movement unit (110) which allows the headstock (102) to swing along a B-axis on a plane coordinate formed by the X-axis and the Z-axis; and **characterized by**
a Y-axis up/down movement unit (120) which allows the headstock (102) to be moved upward and downward along a Y-axis that crosses the X-axis and the Z-axis
wherein the B-axis swing movement unit (110) includes:
a B-axis body (111);
a swing unit which is disposed inside the B-axis body (111), connected with the headstock (102), and is arranged to swing along with the headstock (102);
a swing power transmission unit which is engaged with the swing unit and transmits swing power; and
a B-axis swing power generating unit which is connected to the swing power transmission unit, is arranged to generate rotational power, and allows the swing power transmission unit to swing by the generated rotational power;
wherein the Y-axis up/down movement unit (120) includes:
a Y-axis guide (123) which is formed inside the swing unit, has the same shape as the swing unit, and is arranged to be operated along with the headstock (102);
a power transmission unit which is disposed to be elongated in the Y-axis direction, and connected with the Y-axis guide (123); and
a Y-axis power generating unit which is arranged to generate power for the Y-axis up/down movement.

2. The complex machining turning center of claim 1, wherein the B-axis swing movement unit (110) further includes:
a B-axis coupling (115) which connects the B-axis swing power generating unit to the swing power transmission unit.

3. The complex machining turning center of claim 2, wherein the swing unit is a roller gear cam (113), and the swing power transmission unit is a worm shaft (114) that engages with the roller gear cam (113).

4. The complex machining turning center of claim 3, wherein both end portions of the worm shaft (114) are supported by bearings (116).

5. The complex machining turning center of claim 3, wherein the Y-axis up/down movement unit (120) further includes:
a Y-axis coupling (125) which connects the power transmission unit to the Y-axis power generating unit; and
a feed box (124) which supports the power transmission unit and the Y-axis power generating unit, and has a bearing (126) disposed therein.

6. The complex machining turning center of claim 5, wherein the power transmission unit is a ball screw (122).

7. The complex machining turning center of claim 5, wherein the B-axis swing power generating unit and the Y-axis power generating unit are servomotors (112) and (121).

## Patentansprüche

1. Drehzentrum für komplexe Bearbeitung, in dem ein Werkzeughalter (103) angeordnet ist, um auf einem Bett (101) durch einen Schlitten (104) entlang einer X-Achse bewegt zu werden, ein Reitstock (105) angeordnet ist, um entlang einer Z-Achsen-Richtung bewegt zu werden, und ein Spindelstock (102) angeordnet ist, um in einer C-Achsen-Richtung bewegt zu werden, wobei das Drehzentrum für komplexe Bearbeitung Folgendes umfasst:
eine Schwenkbewegungseinheit (110) für die B-Achse, die dem Spindelstock (102) gestattet, entlang einer B-Achse auf einer ebenen Koordinate zu schwenken, die durch die X-Achse und die Z-Achse gebildet wird; und **gekennzeichnet durch**
eine Auf/ab-Bewegungseinheit (120) für die Y-Achse, die dem Spindelstock (102) gestattet, entlang einer Y-Achse, welche die X-Achse und die Z-Achse kreuzt, aufwärts und abwärts bewegt zu werden,
wobei die Schwenkbewegungseinheit (110) für die B-Achse Folgendes beinhaltet:
einen B-Achsen-Körper (111);
eine Schwenkeinheit, die innerhalb des B-Achsen-Körpers (111) angeordnet ist, verbunden mit dem Spindelstock (102), und die angeordnet ist, um mitsamt dem Spindelstock (102) zu schwenken;
eine Schwenkenergie-Übertragungseinheit, die sich im Eingriff mit der Schwenkeinheit befindet und Schwenkenergie überträgt; und
eine Schwenkenergie-Erzeugungseinheit für die B-Achse, die mit der Schwenkenergie-Übertragungseinheit verbunden ist und die angeordnet ist, um Rotationsenergie zu erzeugen, und der Schwenkenergie-Übertragungseinheit gestattet, aufgrund der erzeugten Rotationsenergie zu schwenken;
wobei die Auf/ab-Bewegungseinheit (120) für die Y-Achse Folgendes beinhaltet:
eine Y-Achsen-Führung (123), die im Inneren der Schwenkeinheit ausgebildet ist, dieselbe Form wie die Schwenkeinheit aufweist und angeordnet ist, um mitsamt dem Spindelstock (102) bewegt zu werden;
eine Energie-Übertragungseinheit, die angeordnet ist, um in der Richtung der Y-Achse langgezogen zu sein und mit der Y-Achsen-Führung (123) verbunden ist; und
eine Energie-Erzeugungseinheit für die Y-Achse, die angeordnet ist, um für die Auf/ab-Bewegung der Y-Achse Energie zu erzeugen.

2. Drehzentrum für komplexe Bearbeitung nach Anspruch 1, wobei die Schwenkbewegungseinheit (110) für die B-Achse ferner Folgendes umfasst:
eine Kupplung (115) für die B-Achse, welche die Schwenkenergie-Erzeugungseinheit für die B-Achse mit der Schwenkenergie-Übertragungseinheit verbindet.

3. Drehzentrum für komplexe Bearbeitung nach Anspruch 2, wobei die Schwenkeinheit eine Globoidkurve (113) ist, und die Schwenkenergie-Getriebeeinheit ist eine Schneckenwelle (114), die mit der Globoidkurve (113) in Eingriff gelangt.

4. Drehzentrum für komplexe Bearbeitung nach Anspruch 3, wobei beide Endteile der Schneckenwelle (114) von Lagern (116) gestützt werden.

5. Drehzentrum für komplexe Bearbeitung nach Anspruch 3, wobei die Auf/ab-Bewegungseinheit (120) für die Y-Achse ferner Folgendes beinhaltet:
eine Kupplung (125) für die Y-Achse, welche die Energie-Übertragungseinheit mit der Energie-Erzeugungseinheit für die Y-Achse verbindet; und
einen Vorschubkasten (124), der die Energie-Übertragungseinheit und die Energie-Erzeugungseinheit für die Y-Achse stützt, wobei in seinem Inneren ein Lager (126) angeordnet ist.

6. Drehzentrum für komplexe Bearbeitung nach Anspruch 5, wobei die Energie-Übertragungseinheit eine Kugelspindel (122) ist.

7. Drehzentrum für komplexe Bearbeitung nach Anspruch 5, wobei die Schwenkenergie-Erzeugungseinheit für die B-Achse und die Energie-Erzeugungseinheit für die Y-Achse Servomotoren (112) und (121) sind.

## Revendications

1. Centre de tournage pour usinage complexe dans lequel un porte-outil (103) est prévu pour être déplacé sur un banc (101) le long d'un axe X par un chariot croisé (104), une poupée mobile (105) est prévue pour être déplacée le long d'une direction d'axe Z, et une poupée fixe (102) est prévue pour être déplacée dans une direction d'axe C, le centre de tournage pour usinage complexe comprenant :
une unité de mouvement d'oscillation suivant un axe B (110) qui permet à la poupée fixe (102) d'osciller suivant un axe B dans un système de coordonnées en plan formé par l'axe X et l'axe Z ; et **caractérisé par** une unité de mouvement de haut en bas suivant un axe Y (120) qui permet à la poupée fixe (102) d'être déplacée vers le haut et vers le bas le long d'un axe Y qui croise l'axe X et l'axe Z,
l'unité de mouvement d'oscillation suivant l'axe B (110) comportant :
un corps d'axe B (111) ;
une unité d'oscillation qui est disposée à l'intérieur du corps d'axe B (111), connectée à la poupée fixe (102) et prévue pour osciller conjointement avec la poupée fixe (102) ;
une unité de transmission de puissance d'oscillation qui est en prise avec l'unité d'oscillation et qui transmet la puissance d'oscillation ; et
une unité de génération de puissance d'oscillation suivant l'axe B qui est connectée à l'unité de transmission de puissance d'oscillation, qui est prévue pour générer une puissance de rotation et qui permet à l'unité de transmission de puissance d'oscillation d'osciller grâce à la puissance de rotation générée ;
l'unité de mouvement de haut en bas suivant l'axe Y (120) comportant :
un guide d'axe Y (123) qui est formé à l'intérieur de l'unité d'oscillation, qui présente la même forme que l'unité d'oscillation et qui est prévu pour être actionné conjointement avec la poupée fixe (102) ;
une unité de transmission de puissance qui est disposée de manière à s'étendre dans la direction de l'axe Y et qui est connectée au guide d'axe Y (123) ; et
une unité de génération de puissance suivant l'axe Y qui est prévue pour générer de la puissance pour le mouvement de haut en bas suivant l'axe Y.

2. Centre de tournage pour usinage complexe selon la revendication 1, dans lequel l'unité de mouvement d'oscillation suivant l'axe B (110) comporte en outre :
un accouplement d'axe B (115) qui relie l'unité de génération de puissance d'oscillation suivant l'axe B à l'unité de transmission de puissance d'oscillation.

3. Centre de tournage pour usinage complexe selon la revendication 2, dans lequel l'unité d'oscillation est une came à roulement à rouleaux (113), et l'unité de transmission de puissance d'oscillation est un arbre de vis sans fin (114) qui s'engage avec la came à roulement à rouleaux (113).

4. Centre de tournage pour usinage complexe selon la revendication 3, dans lequel les deux portions d'extrémité de l'arbre de vis sans fin (114) sont supportées par des paliers (116).

5. Centre de tournage pour usinage complexe selon la revendication 3, dans lequel l'unité de mouvement de haut en bas suivant l'axe Y (120) comporte en outre :
un accouplement d'axe Y (125) qui relie l'unité de transmission de puissance à l'unité de génération de puissance suivant l'axe Y ; et
une boîte d'alimentation (124) qui supporte l'unité de transmission de puissance et l'unité de génération de puissance suivant l'axe Y, et qui présente un palier (126) disposé dans celle-ci.

6. Centre de tournage pour usinage complexe selon la revendication 5, dans lequel l'unité de transmission de puissance est une vis à billes (122).

7. Centre de tournage pour usinage complexe selon la revendication 5, dans lequel l'unité de génération de puissance d'oscillation suivant l'axe B et l'unité de génération de puissance suivant l'axe Y sont des servomoteurs (112) et (121).
